# EUROPÄISCHE PATENTANMELDUNG

(11) **EP 0 650 107 A1**
(43) Veröffentlichungstag der Anmeldung: **26.04.1995**
(21) Anmeldenummer: 94116504.5
(22) Anmeldetag: 19.10.1994
(51) Int. Cl.: G05D 3/20, G01D 5/249, G08C 25/02, E05F 15/10, B66B 13/14, B60J 7/057, G05B 19/23

(54) **Steuersystem für motorische Antriebe**

(30) Priorität: 22.10.1993 DE 4336139
(71) Anmelder: Tornado Antriebstechnik GmbH, D-13507 Berlin (DE)
(72) Erfinder: Albayrak, Hasan Gökcer, Dipl.-Ing., D-13355 Berlin (DE); Blöss, Christian,Dipl.-Phys., D-10999 Berlin (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Es wird ein Steuersystem für motorische Antriebe, insbesondere für Tore, Fördersysteme, Transportgeräte, Versehrtenlifte und dergleichen beschrieben, bei dem vorgebbare Stop-Positionen unter Ausführung von Vergleichsvorgängen zwischen aktuellen und gespeicherten Signalen durchgeführt werden. Dabei findet ein als Multifunktionseinheit ausgeführter Positionskomparator mit zugeordneter Zähleinheit Verwendung, der zusammen mit einem zur aktuellen Positionsbestimmung vorgesehenen Impulsgeber in einer Kompakteinheit mit minimierter Signalübertragungsstrecke zusammengefaßt ist, während die zwischen dem Positionskomparator und der davon getrennten externen Steuereinheit vorgesehene Verbindungsleitung als Datenleitung zur Übertragung von in Form von Informationstelegrammen und zugehörigen Prüftelegrammen verwendet ist.

## Beschreibung

Die Erfindung betrifft ein Steuersystem für motorische Antriebe von zwischen zumindest zwei vorgebbaren Positionen verfahrbaren Vorrichtungen wie Toren, Transportgeräten, Fördersystemen, Versehrtenliften und dergleichen, mit einer in Abhängigkeit von Ausgangssignalen eines Positionskomparators betätigbaren Schalt- und Steuereinrichtung für den Antriebsmotor, einem mit dem Antriebsmotor verbundenen Impulsgeber, dessen Ausgangssignale dem Positionskomparator und in vorgebbarer Weise einer mit dem Positionskomparator zusammenwirkenden Speichereinheit zuführbar sind, sowie einer vom Benutzer betätigbaren externen Steuereinheit zur Erzeugung von Absolutpositionen zugeordneten, dem Positionskomparator zuführbaren Steuersignalen.

Im Zusammenhang mit der Steuerung von Verschlußorganen, beispielsweise Rolltoren oder Garagentoren, ist es bekannt, zur Festlegung der jeweiligen Stop-Stellung, die zum Beispiel der geschlossenen oder offenen Position eines Tores entspricht, Endschalter vorzusehen, die bei dem Erreichen der jeweils vorgegebenen Position betätigt werden und die dann über ein Relais den jeweiligen Antriebsmotor abschalten. Muß eine Stop-Stellung oder auch eine gegebenenfalls vorgesehene Zwischenstellung verändert werden, so ist es bei diesen bekannten Anordnungen erforderlich, den Endschalter bzw. das mit den Endschaltern zusammenwirkende Anschlagorgan zu versetzen.

Beispielsweise aus dem Gebrauchsmuster 82 22 087.5 ist es auch bereits bekannt, derartige Steuervorrichtungen ohne Endschalter auszubilden und auf diese Weise die Einstellung neuer Stop-Stellungen zu erleichtern. Dazu wird eine Anordnung verwendet, die einen mit der Motorachse gekuppelten Impulsgeber, einen in der Nähe der Bahn des Impulsgebers angeordneten Aufnehmer, einen mit dem Aufnehmer gekoppelten Zähler und eine mit dem Zähler verbundene Vergleichsschaltung aufweist, deren Eingang mit einer Vergleichsquelle und deren Ausgang mit der Antriebsvorrichtung gekuppelt ist. Wenn die Vergleichsschaltung einen übereinstimmenden Inhalt des Zählers und der Vergleichsquelle wahrnimmt, wird ein Ausgangssignal gebildet, das durch die Antriebsvorrichtung als Stopsignal interpretiert wird. Diese Vorrichtung kann dadurch geeicht werden, daß in der einen Ausgangsstellung der Zähler auf Null eingestellt wird und man den Wert der Vergleichsquelle mit der anderen Endstellung korrespondieren läßt. Dabei ist es auch möglich, Zwischenstellungen einzustellen, indem über eine Vielfachschaltung mehrere Zähler mit der Vergleichsschaltung verbunden werden.

Aus der EP 0 280 854 B1 ist eine Anordnung für die Steuerung des motorischen Antriebs eines zwischen zwei Endstellungen und gegebenenfalls dazwischenliegenden Haltestellungen hin- und hergehend bewegbaren Torblattes bekannt, die analog zu der vorstehend erläuterten Steuervorrichtung ohne mechanische Endschalter mit Impulszählung und Impulsvergleich arbeitet. Eine Abschaltung der Antriebsmotorspeisung und damit eine Stillsetzung des Torblattes erfolgt dabei immer dann, wenn der sich im Verlauf der Torblattbewegung ergebende Zählwert gleich einem gespeicherten Zählwert ist, das heißt es können in einem sogenannten teach-in-Betrieb, bei dem das Torblatt über den gesamten Bewegungsbereich geführt wird, den gewünschten Haltestellungen entsprechende Zählwerte eingespeichert und anschließend im Normalbetrieb mit den sich ergebenden Zählwerten verglichen werden.

Da in der Praxis eine Zählwertverfälschung durch Störeffekte, insbesondere herrührend von benachbarten elektrischen Systemen, zu eventuell kritischen Veränderungen der sich ergebenden Stop-Positionen führen kann und eine Ausschaltung derartiger Störeffekte im Regelfall nicht möglich ist, wird bei dieser bekannten Anordnung eine Referenzpunkt-Indikatorvorrichtung vorgesehen, die bei jeder Öffnungs- und Schließbewegung des Tores durchlaufen wird und bei jedem Durchlauf ein Sychronisiersignal erzeugt, wobei die Bestimmung der jeweils angestrebten Endstellung bzw. Haltestellung in Abhängigkeit von der Überfahrrichtung der Referenzpunktstellung abhängig ist.

Durch die Verwendung einer solchen Referenzpunkt-Indikatorvorrichtung, die bei jedem Durchlauf des Tores ein Synchronisiersignal erzeugt, kann zwar die Störungsanfälligkeit aufgrund des jedem Öffnungs- bzw. Schließvorgang zugeordneten Synchronisierungsvorgangs verringert werden, aber es ist weiterhin möglich, daß im Verlauf der Torbewegung zwischen der der Referenzpunkt-Indikatorvorrichtung entsprechenden Position und der jeweiligen Halte- bzw. Endposition der Torstellung Störimpulse eingekoppelt werden, die das Zählergebnis und damit das Vergleichsergebnis verfälschen und als Folge davon zu Ungenauigkeiten der jeweils vorgesehenen Tor-Halteposition führen.
Weiterhin kritisch ist vor allem, daß ein während der Bewegung des Tores zwischen der Referenzpunkt-Indikatorvorrichtung und einer Endstellung ein gekoppelter Störimpuls auch als Synchronisierimpuls wirken kann und dadurch wiederum diejenigen Gefahren entstehen, die durch die Forderung nach einem bei jeder Torbewegung geforderten Durchlaufen der Referenzpunkt-Indikatorvorrichtung und der damit verbundenen Erzeugung eines Synchronisiersignals ausgeschaltet werden sollten.

Durch sorgfältige Schirmung der signalführenden Leitungen und besondere Maßnahmen bei der Montage könnte zwar versucht werden, diesem Mangel abzuhelfen, aber in der Praxis läßt sich dies im Regelfall nicht erreichen, da die örtlichen Einbaugegebenheiten oft zu ungünstig sind und die speziell vorauszusetzende Sorgfalt bei der Montage nicht immer gewährleistet werden kann.

Aufgabe der Erfindung ist es, ein Steuersystem für motorische Antriebe für zwischen zumindest zwei vorgebbare Positionen verfahrbare Vorrichtungen der eingangs angegebenen Art zu schaffen, das eine äußerst hohe, von der Montagesorgfalt und auch von elektrischen Störeinflüssen unabhängige Betriebssicherheit und Ansteuergenauigkeit aufweist und dabei einfach zu montieren und zu bedienen ist.

Gelöst wird diese Aufgabe nach der Erfindung im wesentlichen dadurch, daß der als Multifunktionseinheit ausgeführte Positionskomparator mit zugeordneter Zähleinheit unter Ausbildung einer minimierten Signalübertragungsstrecke dem Impulsgeber unmittelbar benachbart angeordnet ist, und daß die zwischen dem Positionskomparator und der davon getrennten externen Steuereinheit vorgesehene Verbindungsleitung als Datenleitung zur Übertragung von Digitalsignalen in Form von Informationstelegrammen und die Sicherstellung der Korrektheit der Übertragung gewährleistenden zugehörigen Prüftelegrammen verwendet ist.

Die Erfindung beruht vor allem auf der Überlegung, daß die im Gesamtsystem erzeugten, übertragenen und verarbeiteten Signale störungsimmun gemacht werden, und zwar zum einen dadurch, daß störbare Signale durch Minimierung des Übertragungswegs praktisch nicht mehr gestört werden können, bzw. keine Einkopplungsmöglichkeit für Störungen besteht, während alle anderen zwischen verschiedenen, insbesondere weit auseinander liegenden Einheiten zu übertragenden und damit grundsätzlich störungsanfälligen Signale, insbesondere Befehlssignale, in Form von einer Hochsprache entsprechenden Informationstelegrammen und zugehörigen, die Korrektheit der Übertragung gewährleistenden Prüftelegrammen übertragen werden, wodurch sich eine außerordentlich hohe Funktionssicherheit erzielen läßt.

Diese Konzeption des Steuersystems führt auch dazu, daß die bei bekannten Systemen vorhandene Synchronisierungsproblematik nicht mehr gegeben ist und vor allem nicht mehr bei jedem Öffnungs- und Schließvorgang im Falle einer Torsteuerung eine Synchronisierung vorgenommen werden muß.

Von besonderem Vorteil ist es, wenn gemäß der Erfindung Mittel vorgesehen sind, die eine Übernahme eines Synchronisiersignals außerhalb eines vorzugsweise einstellbaren, auf die Synchronisierposition bezogenen Zeit- bzw. Streckenfensters blockieren. Auf diese Weise wird die Sicherheit weiter wesentlich erhöht, da dann, wenn von Zeit zu Zeit eine Synchronisierung vorgenommen wird, auch während dieser Phase das Einstreuen eines als Synchronisiersignal fehlinterpretierten Störsignals praktisch ausgeschlossen werden kann, da die Wahrscheinlichkeit, daß gerade in diesem kleinen Zeit- bzw. Streckenfenster ein solches Störsignal auftritt, zum einen gering ist, und zum andern selbst bei Auftreten eines Störsignals in diesem kleinen Zeit- bzw. Streckenfenster keine praktischen Probleme entstehen können, da Störsignal und tatsächliches Synchronisiersignal aufgrund der Fensterbegrenzung äußerst nahe beieinanderliegen würden.

Das Anfahren der jeweils gewünschten Stop-Position erfolgt dadurch, daß über die externe Steuereinheit dem Positionskomparator der der entsprechenden Stop-Position zugeordnete Zählwert, der im Rahmen eines vorangehenden teach-in-Betriebs festlegbar ist, in Form von störungsunempfindlichen Informationstelegrammen übermittelt wird, wobei die Motor-Laufrichtung durch Differenzbildung zwischen dem aktuellen Zählerstand und dem dem Befehl entsprechenden Zählerstand ermittelt und über einen dem Positionskomparator zugeordneten Treiber ein den Antriebsmotor steuernder Frequenzumsetzer angesteuert wird und der Motor dann stillgesetzt und die bewegte Vorrichtung angehalten wird, wenn vom Positionskomparator Gleichheit zwischen dem aktuellen Zählwert und dem der anzusteuernden Position entsprechenden Zählwert festgestellt wird.

Da die zur Zählwertbildung dienenden, vom Impulsgeber erzeugten Signale dem eine Multifunktionseinheit darstellenden Positionskomparator unmittelbar und nicht über eine die Einkopplung von Störungen ermöglichende Signalübertragungsstrecke zugeführt werden und alle übrigen zum Betrieb des Steuersystems benötigten und erzeugten Signale bezüglich externer Störungseinflüsse unempfindlich sind, ermöglicht es das erfindungsgemäße Steuersystem, die gestellte Aufgabe in vollem Umfange zu lösen. Die Durchführung von Synchronisiervorgängen kann in vergleichsweise großen zeitlichen Abständen bzw. vorsorglich nach einer größeren Anzahl von Betätigungsvorgängen erfolgen, was im Hinblick auf die dem Steuersystem immanente Störungsunempfindlichkeit voll ausreichend ist.

Bevorzugt weist der als Inkrementalgeber ausgebildete Impulsgeber eine mit der Motorwelle rotierende Gebereinheit und eine stationäre Abtasteinheit auf, wobei wesentlich ist, daß die Abtasteinheit, in der die Signalerzeugung erfolgt, und der das Zählsystem bzw. Zählwerk umfassende Positionskomparator zu einer kompakten Baueinheit zusammengefaßt sind. Diese Zusammenfassung kann zweckmäßigerweise so erfolgen, daß Abtasteinheit und Positionskomparator auf zwei unmittelbar miteinander gekoppelten oder auf derselben Platine angeordnet sind, wobei die Abtastorgane bezüglich der Platine mit solchem Überstand fixiert sind, daß sie unmittelbar von der rotierenden Gebereinheit beeinflußt werden können. Zur Signalerzeugung werden bevorzugt magnetische und / oder optische Mittel verwendet. Aufgrund dieser Kompakt-Ausgestaltung der signalerzeugenden und signalumwandelnden bzw. signalverarbeitenden Anordnung wird die angestrebte Immunität gegen externe Störungen erreicht.

Der als Inkrementalgeber ausgebildete Impulsgeber liefert zwei vorzugsweise im 90° phasenverschobene Impulssignale, die dem Positionskomparator zur Positionsbestimmung unter Berücksichtigung der jeweiligen Drehrichtung des Antriebs durch permanente Aktualisierung des Zählerstandes dienen. Ein vorteilhafterweise verwendbarer Inkrementalgeber ist in der deutschen Patentanmeldung P 43 11 267.6 beschrieben.

Nach einer möglichen Ausführungsform der Erfindung besteht der Positionskomparator aus einem Mikroprozessor, welcher insbesondere über ein EEPROM zur nicht flüchtigen Speicherung der vorgebbaren, zu vergleichenden Position,
über einen Eingang für ein Signal zur anfänglichen und später gelegentlichen Kalibrierung des Zählerstandes,
über einen Treiberausgang, vorzugsweise zur Ansteuerung eines Frequenzumformers, bestehend aus zwei digitalen und einem analogen Ausgang und
über eine serielle Schnittstelle zur anwenderseitigen Kommunikation verfügt.

Der Positionskomparator kann gemäß einer weiteren Ausgestaltung der Erfindung anstelle einer seriellen Schnittstelle oder zusätzlich zu einer seriellen Schnittstelle eine parallele Schnittstelle aufweisen, über die die vorzugsweise in der externen Steuereinheit gebildeten Codes der abzuspeichernden bzw. anzufahrenden Positionen, Speicher- bzw. Startbefehle und / oder bestimmte Betriebsarten wie teach-in-Betrieb oder Komparator- bzw. Positionierbetrieb angezeigt werden können.

Bei einer bevorzugten Ausführungsform der Erfindung wird ein alle notwendigen Funktionen erfüllender ASIC vorgesehen, wobei in diesem Falle kein EEPROM vorhanden ist und aus diesem Grunde auch kein teach-in-Betrieb erforderlich ist. Dabei besteht der Treiberausgang bevorzugt aus vier digitalen Ausgängen, die vorzugsweise zur Ansteuerung eines Frequenzumformers dienen.

Eine weitere Ausgestaltung des Steuersystems nach der Erfindung zeichnet sich dadurch aus, daß bei nicht umlaufend verfahrbarer Vorrichtung in zumindest einem Endbewegungsbereich der Vorrichtung ein Bereichindikator zur Erzeugung eines dem Positionskomparator bzw. dessen Zähleinheit zuführbaren Kalibriersignals vorgesehen ist, während bei umlaufend verfahrbarer Vorrichtung in einem vorgebbaren Bewegungsbereich der Vorrichtung ein Bereichsindikator vorgebbarer Länge zur Erzeugung von dem Positionskomparator bzw. dessen Zähleinheit zuführbaren Kalibriersignalen verwendet ist.

Im Zusammenhang mit der in einer Hochsprache erfolgenden Übertragung von Informations- und Prüftelegrammen ist es möglich, eine praktisch absolut sichere Befehlsübertragung zu gewährleisten, da im Falle des Auftretens von Abweichungen zwischen Informationstelegramm und Prüftelegramm eine Befehlsausführung nur dann erfolgt, wenn derartige Abweichungen bei wiederholter Übertragung dieser Telegramme nicht mehr vorliegen.

Das Steuersystem nach der Erfindung läßt es auch zu, mehrere Antriebseinheiten zugeordnete Positionskomparatoren über eine Ringleitung von einer Steuereinheit aus zu steuern, wobei über die Ringleitung unter entsprechender Adressierung Befehlsübertragungen in beiden Richtungen möglich sind und wie im Falle eines Einzelsystems auch eine Überwachungsfunktion dergestalt integriert werden kann, daß Befehle nur dann ausgeführt, bzw. Fahrbewegungen fortgeführt werden, wenn von der zentralen Steuereinheit in vorgebbaren kurzen Zeitabständen entsprechende Abfrageimpulse ankommen, die signalisieren, daß das Gesamtsystem intakt ist und beispielsweise keine Übertragungsleitung zerstört worden ist.

Im Bereich zumindest eines Endes einer Bewegungsstrecke, z.B. des Weges eines Tores, ist gemäß der Erfindung ein Bereichsindikator vorgesehen, der aus einem ein Flankensignal zur Bewegungsabbremsung liefernden Organ besteht, wobei durch die Positionierung dieses Organs der Flankenvorlauf einstellbar und das Signal gleichzeitig als Synchronisiersignal verwendbar ist.

Dieses signalerzeugende Organ kann beispielsweise an einem Tor in dessen oberen Bereich eingebracht sein oder auch aus einem Endschalter bestehen, der über einen mit der Motorwelle gekoppelten Spindeltrieb betätigbar ist.

Wenn vermieden werden soll, daß der Bereichsindikator oder Referenzpunktgeber am Tor monitiert werden muß, weil die erforderliche genaue Montage unerwünscht ist oder die sich durch die Bewegungen des Tores evtl. ergebenden Störungen nicht in Kauf genommen werden sollen, dann wird gemäß einer Ausführungsform der Erfindung ein Referenzpunktgeber in der Motor-Getriebeeinheit vorgesehen, und zwar in Form eines ring- oder kreisscheibenförmigen Permanentmagneten mit einem Nordpolbereich und einem Südpolbereich und zumindest einem zugeordneten Hall-Sensor, wobei dieser Permanentmagnet mit dem Abtrieb des Getriebes, insbesondere des Schneckengetriebes über ein weiteres, vorzugsweise ebenfalls aus einem Schneckengetriebe bestehendes Getriebe im wesentlichen spielfrei gekuppelt ist. Dieser angetriebene, vorzugsweise scharf magnetisierte Permanentmagnet dreht sich über den gesamten Bewegungsbereich der angetriebenen Vorrichtung, insbesondere des angetriebenen Tores über einen Drehbereich zwischen 0° und 360° und wird vorzugsweise so montiert und justiert, daß der Referenzpunkt, d. h. der scharfe Übergang zwischen den beiden Polbereichen knapp, d. h. etwa 50 cm vor dem oberen Auf-Punkt des Tores liegt. Vorteilhaft ist bei dieser Ausgestaltung vor allem, daß die Montage des Referenzpunktgebers einfach und exakt vorgenommen werden kann und der Referenzpunktgeber auch geschützt in einem Gehäuse gelegen ist. Für den Fall des Stromausfalls wird bei dieser Ausführungsform in gleicher Weise wie bei der bereits geschilderten ersten Ausführungsform bei einem zwischen zwei Positionen verfahrbarem Tor die Bewegung in Schließrichtung blockiert und sichergestellt, daß bei der ersten Bewegung des Tores nach Stromausfall sich das Tor in Richtung der Offen-Position bewegt und damit evtl. Beschädigungsgefahren ausgeschlossen werden.

Nach einer weiteren bevorzugten Ausgestaltung der Erfindung wird anstelle eines Referenzpuktgebers ein relativ ungenauer Absolutwertgeber vorgesehen und im Zusammenwirken von relativ ungenauem Absolutwertgeber und Inkrementalgeber sichergestellt, daß nach Stromausfall das jeweilige Tor sowohl nach oben als auch nach unten bewegt werden kann, weil der ungenaue Absolutwertgeber über die von ihm erzeugte analoge Signalkurve praktisch eine Mehrzahl von Referenzpunkten liefert und demgemäß auch jeweils bekannt ist, wo sich das Tor in etwa befindet. Man fährt in diesem Falle nach einem Stromausfall in Richtung einer Endposition und nimmt die erforderliche Korrektur über den Inkrementalgeber vor, d. h. der Inkrementalgeber wird nur jeweils im letzten Bewegungsbereich vor einer Endposition eingesetzt. Da die Zählwerte für die Endpunkte bekannt sind, läßt sich über eine Differenzbildung bestimmen, wieviele Teilschritte über den Inkrementalgeber vorgegeben werden müssen. Realisiert wird der relativ ungenaue Absolutwertgeber in gleicher Weise wie der Referenzpunktgeber, der vorstehend bereits im Zusammenhang mit dessen Anordnung im Motor-Getriebegehäuse erläutert wurde. Unterschiedlich ist jedoch, daß der zweipolige Permanentmagnet weich magnetisiert wird, um die zur Positionsbestimmung erforderliche, angenähert sinusförmige Signalkurve zu erhalten.

Gemäß einer weiteren Ausführungsform der Erfindung wird ein Absolutwertgeber von ausreichend hoher Genauigkeit verwendet, d. h. ein Absolutwertgeber mit so hoher Auflösung, daß der sonst erforderliche Inkrementalgeber entfallen kann. Auch bei diesem Absolutwertgeber handelt es sich vorzugsweise um einen weich magnetisierten, zweipoligen Permanentmagneten mit zwei zueinander um 90° versetzt angeordneten Hall-Sensoren, wobei dieser Permanentmagnet wiederum mit dem Abtrieb des Getriebes mechanisch so untersetzt gekuppelt ist, daß er bezogen auf den Bewegungsbereich der jeweils angetriebenen Einheit sich über einen Bereich von 0° bis 360° dreht und in diesem Bereich die Bewegung der angetriebenen Einheit abbildet. Durch Auswertung der jeweils linearen Bereiche der Ausgangssignale der beiden Sensoren und auf trigonometrischen Funktionen beruhende Signalbildung werden hochgenaue Absolutwerte für die Momentanposition der jeweils angetriebenen bzw. verfahrbaren Einrichtung erzeugt und der bei allen Ausführungsformen vorhandenen Multifunktionseinheit zugeführt, die sich in räumlich geringer Entfernung von dem Absolutwertgeber befindet und praktisch im gleichen Gehäuse untergebracht ist.

Weitere vorteilhafte Ausgestaltungen und Merkmale der Erfindung sind in den Unteransprüchen angegeben und werden im Zusammenhang mit der nachfolgenden Beschreibung von Ausführungsbeispielen erläutert.

In der Zeichnung zeigt:
- Figur 1: ein schematisches Blockschaltbild zur Erläuterung des Steuersystems nach der Erfindung,
- Figur 2: eine schematische Darstellung der Anordnung eines Referenzpunkt- oder Absolutwertgebers im Motor-Getriebegehäuse,
- Figur 3: ein schematisches Diagramm des Signalverlaufs für einen Referenzpunktgeber, und
- Figur 4: ein schematisches Diagramm des Signalverlaufs für einen Absolutwertgeber.

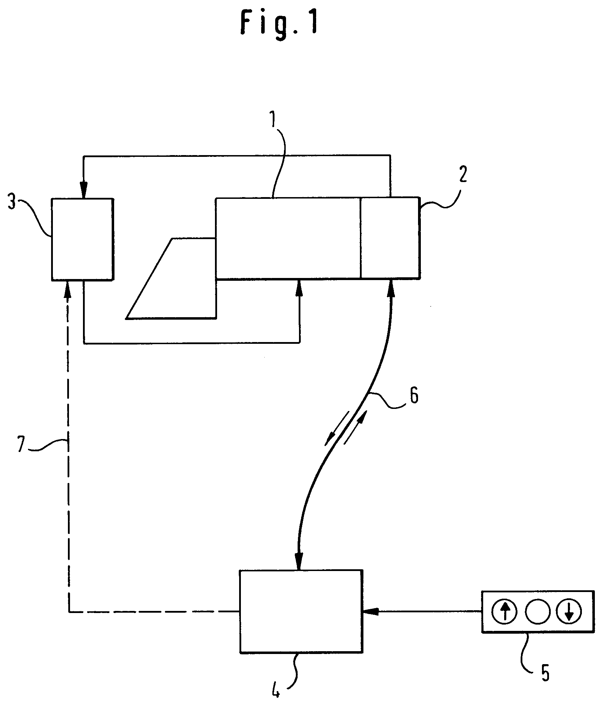

Figur 1 zeigt eine motorische Antriebseinheit 1, bestehend aus Elektromotor und Getriebe, ist in nicht gezeigter Weise mit einer verfahrbaren Vorrichtung, wie zum Beispiel einem Tor, einem Karteilift oder einem Versehrtenlift verbunden und bewegt die entsprechende Vorrichtung, gegebenenfalls nach einem vorgebbaren Geschwindigkeitsprofil, zwischen vorgebbaren Stop- oder Haltepositionen.

Mit der Motorantriebswelle unmittelbar verbunden ist ein Impulsgeber, der mit einem als Multifunktionseinheit ausgebildeten Positionskomparator mit zugehörigem Zähler zu einer Kompakteinheit 2 zusammengefaßt ist, und zwar derart, daß die elektrische Signalübertragungsstrecke zwischen Impulsgeber und Positionskomparator minimiert und damit unempfindlich bezüglich eventueller Fehlereinstreuungen ist.

Der Positionskomparator ist über einen geeigneten Treiberausgang mit einem zur Ansteuerung der Antriebseinheit 1 bestimmten Frequenzumformer 3 verbunden.

Eine externe Steuereinheit 4, der eine Bedienungseinheit 5 zugeordnet ist, ist über eine Datenleitung 6 mit dem Positionskomparator verbunden.

Gegebenenfalls kann über eine Leitung 7 eine direkte Ansteuerung des Frequenzumformers 3 von der externen Steuereinheit 4 erfolgen.

Wesentlich ist im Zusammenhang mit dem Steuersystem nach der Erfindung, daß über die sich zwischen den verschiedenen Komponenten erstreckenden Datenleitungen ausschließlich gegen externe Störungen unempfindliche, in Form von Informationstelegrammen und die Sicherstellung der Korrektheit der Übertragung gewährleistenden zugehörigen Prüftelegrammen übertragen werden, wodurch die Gefahr der Fehlereinkoppelung bei der Informationsübertragung praktisch beseitigt wird.

Wie bereits erläutert worden ist, erfolgt im Rahmen eines teach-in-Betriebs eine Abspeicherung der Zählerstände, die bestimmten vorgebbaren Stop-Positionen, zum Beispiel der Öffnungs- und Schließposition eines Tores und gegebenenfalls eventueller Zwischenpositionen entsprechen, in einem Speicher, wobei die entsprechenden Datenübertragung über die Datenleitung 6 erfolgt. Der aktuelle Zählerstand steht über die praktisch vom Positionskomparator gebildete Multifunktionseinheit stets zur Verfügung und kann ebenfalls über die Datenleitung 6 zur externen Steuereinheit 4 übertragen werden.

Soll eine bestimmte Stop-Postion angefahren werden, so ergibt sich die anzusteuernde Drehrichtung aus der Differenzbildung zwischen dem aktuellen Zählerstand und dem dem Befehl entsprechenden Zählerstand, so daß der Antriebsmotor anlaufen und sich bis zum Erhalt eines Stopsignals drehen kann, wobei das Stopsignal dann erzeugt wird, wenn Gleichheit zwischen dem aktuellen Zählerstand und dem dem Befehl entsprechenden Zählerstand erreicht ist.

In der bereits erwähnten ASIC-Ausführung gibt es keine Positionsabspeicherung seitens der Motorsteuerung. Vielmehr fragt bei dieser Ausführungsform die Hauptsteuerung den ASIC nach der jeweiligen aktuellen Position und speichert diese dann selbst ab.

Entsprechend einer besonderen Ausführungsform des Steuersystems nach der Erfindung ist es auch möglich, das Anfahren bestimmter Stop-Postionen entsprechend einem gewünschten Geschwindigkeitsverlauf vorzunehmen, wozu zum Beispiel eine Geschwindigkeitsverringerung kurz vor Erreichen der vorgesehenen Stop-Position erfolgen kann und der Zeitpunkt des Beginns dieser Geschwindigkeitsverringerung wiederum durch entsprechenden Vergleich von aktuellem Zählerstand und einem gespeicherten Wert erfolgt.

Bevorzugt sind dabei zwei Vorwarnstufen vorgesehen, die jeweils zu einer Drehzahländerung verwendet werden können. Im übrigen kann der Positionskomperator auch jederzeit, und zwar unter kurzzeitiger Einfrierung der Treiberzustände, neu gestartet werden, so daß eine beliebige Folge von temporären Drehzahländerungen vor dem endgültigen Erreichen der Endposition durchgeführt werden kann.

Zur Erzeugung eines Kalibriersignals, das dazu führt, daß der Positionskomparator den Zählerstand auf einen festlegbaren Wert setzt, kann beispielsweise ein Bereichsindikator vorgesehen sein. Ein derartiger Bereichsindikator wird bei einer zwischen zwei Positionen hin- und hersteuerbaren Vorrichtung vorzugsweise in einem Bewegungs-Endbereich angeordnet, das heißt ein derartiger Bereichsindikator muß nicht bei jeder Bewegung der Vorrichtung überfahren werden, und es ist im Rahmen der Erfindung auch nicht notwendig, daß immer dann, wenn der Bereichsindikator überfahren wird, ein Synchronisiervorgang durchgeführt wird.

Als Bereichsindikatoren eignen sich beispielsweise magnetisch oder optisch kodierte Streifen mit zugehörigen Sensoren, die gegebenenfalls auch zur Fahrtrichtungserkennung genutzt werden können.

Für die Praxis günstig ist ferner, daß als Bereichsindikator beispielsweise auch ein Endschalter verwendbar ist, der über einen mit der Motorwelle gekoppelten Spindeltrieb betätigt werden kann und ein Flankensignal zur Bewegungsabbremsung liefert, wobei durch Positionierung des Endschalters der Flankenvorlauf einstellbar ist und damit dem Bewegungsverhalten der jeweiligen Vorrichtung Rechnung getragen werden kann.

Bei umlaufender Bewegung der angetriebenen Last, zum Beispiel im Falle eines Karteilifts, kann pro Lastumlauf bei gleicher Drehrichtung durch entsprechende Ausgestaltung des Referenzbereichsindikators erreicht werden, daß nur eine abfallende und nur eine aufsteigende Flanke auftreten, wobei der einem Wegabstand entsprechende Abstand zwischen abfallender und aufsteigender Flanke des Signals durch Vorsehen eines entsprechend ausgebildeten Indikatorbereichs bestimmt werden kann.

Für den Fall einer nicht umlaufenden Bewegung, wie dies zum Beispiel bei einer Torsteuerung der Fall ist, kann der Bereichsindikator so ausgebildet sein, daß je Drehrichtung vorzugsweise nur eine abfallende oder nur eine ansteigende Flanke am Signaleingang bzw. Reset-Eingang auftritt.

Der Positionskomparator kann gemäß der Erfindung in unterschiedlicher Weise betrieben werden, um seiner Besonderheit als Multifunktionseinheit Rechnung zu tragen.

Es ist beispielsweise vorgesehen, den Positionskomparator über die externe Steuereinheit 4 mit einem Befehl anzusteuern, der beispielsweise für eine Testfahrt in eine zeitlich nicht veränderliche Konstellation der Treiberausgänge übersetzt wird, und es ist auch möglich, dem Positionskomparator einen Befehl zuzuführen, der ausschließlich in eine zeitlich begrenzte Änderung der Konstellation der Treiberausgänge mit anschließender Rückkehr in die vorherige Konstellation übersetzt wird, um beispielsweise einen Tipp-Betrieb zu realisieren.

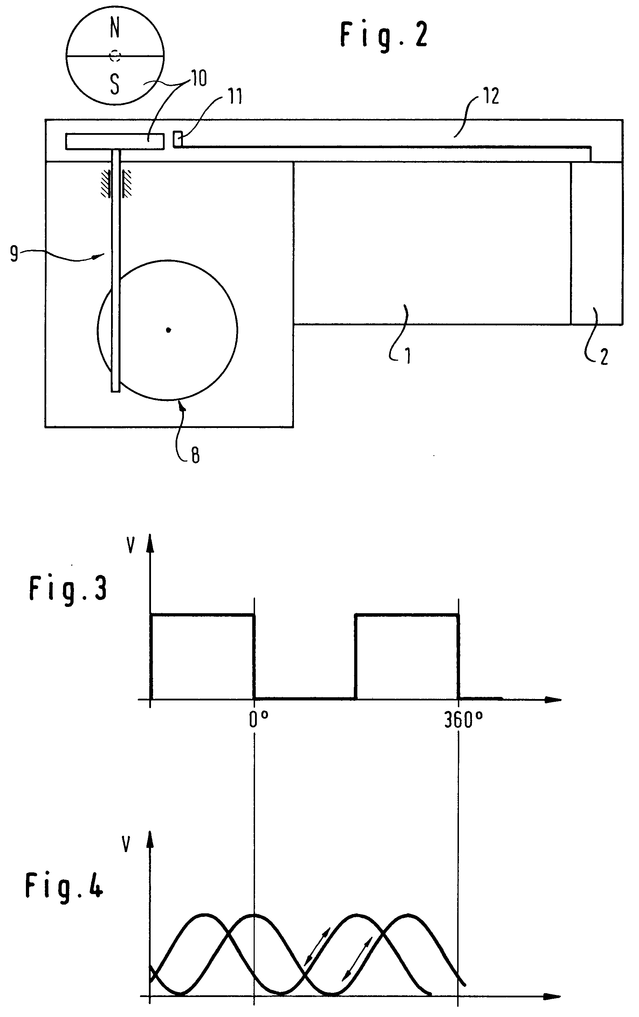

Figur 2 zeigt in schematischer Weise die Integration eines Referenzpunktgebers 10 bzw. eines entsprechenden Absolutwertgebers in der aus Antriebsmotor und Getriebe bestehenden Antriebseinheit 1. Dazu ist der Abtrieb des von einem Schneckengetriebe 8 gebildeten Getriebes über ein weiteres Schneckengetriebe 9 mit einem scheibenförmigen Permanentmagneten gekuppelt, der im dargestellen Ausführungsbeispiel im oberen Bereich des Gehäuses 12 angeordnet ist und sich damit auch in unmittelbarer Nähe der Kompakteinheit 2 zur Signalverarbeitung befindet. Bei dem Permanentmagneten 10 handelt es sich um einen scheibenförmigen Magneten mit einem Nordpol- und einem Südpolbereich, wie er außerhalb des Gehäuses schematisch gezeigt ist. Dem Permanentmagneten 10 ist zumindest ein Hall-Sensor 11 zugeordnet. Dieser Hall-Sensor 11 oder weitere dem Permanentmagneten 10 zugeordnete Hall-Sensoren 11 können auf einer Platine angeordnet sein, die gleichzeitig weitere Elemente zur Signalverarbeitung und Signalauswertung trägt und die ebenfalls in dem oberen Gehäusebereich 12 vorgesehen sein kann. Die elektrischen Verbindungsleitungen zwischen den Hall-Sensoren und der Kompakteinheit sind sehr kurz und damit auch nicht störungsanfällig bezüglich evtl. Einstreuungen.

Es besteht keine Notwendigkeit, den Referenzpunkt- oder Absolutwertgeber an der in Figur 2 gezeigten Position anzuordnen, aber wesentlich ist immer, daß er räumlich möglichst nahe zur Kompakteinheit 2 positioniert ist.

Für den Fall des Referenzpunktgebers ist der Permanentmagnet 10 scharf magnetisiert ausgebildet, so daß über den Sensor 11 eine ausgeprägte Rechteckspannung erhalten wird, wie sie in Figur 3 schematisch gezeigt ist.

Für den Fall der Verwendung des Permanentmagneten 10 als Absolutwertgeber wird ein weich magnetisierter Permanentmagnet verwendet, der bewirkt, daß in zwei um 90° gegeneinander vesetzt angeordneten Hall-Sensoren etwa sinusförmige Spannungsverläufe, wie sie in Figur 4 gezeigt sind, erhalten werden, welche ausgeprägte, im wesentlichen linear verlaufende Signalkurvenabschnitte aufweisen, die sich sehr gut zur exakten Auswertung und damit zur exakten Bestimmung der Absolutpositionen eignen.

Im Falle der Verwendung von zwei um 90° gegeneinander versetzten Sensoren ist es immer möglich, über den Gesamtbereich von 360° einen linearen Bereich auszuwählen, wobei bei einer entsprechend weichen Magnetisierung des Permanentmagneten eine sehr gute Annäherung an die Sinuskurve erzielt wird und damit auch die Auswertemöglichkeiten über trigonometrische Funktionen optimal sind.

Auch im Falle der Verwendung des Permanentmagneten als Referenzpunktgeber ist es vorteilhaft, zwei Sensoren vorzusehen, die aber einander nicht diametral gegenüberliegen, sondern aus dieser Position etwas versetzt sind. Dies führt dazu, daß die aufsteigende Flanke des einen Sensors sehr nahe der abfallenden Flanke des anderen Sensors gelegen ist und durch die beiden nebeneinanderliegenden Flanken ein kleiner Bereich definiert wird, wobei diesem Bereich zugeordnet eine Leuchtdiode angesteuert werden kann. Die Sensoren arbeiten hier praktisch als digitale Sensoren, weil sie nur die Flanken detektieren.

Die mechanische Übertragung der Bewegung zum drehenden Magneten kann in der Praxis praktisch spielfrei ausgeführt werden, was durch eine gewisse gegenseitige Verspannung von Einzelelementen erreichbar ist. Sollte ein geringes, bekanntes Spiel verbleiben, so kann dies auch elektrisch korrigiert werden.

Wesentlich ist, daß die Signalgewinnung im Zusammenhang mit dem Referenzwertgeber oder dem Absolutwertgeber berührungsfrei erfolgt, d. h. es wird bevorzugt eine magnetische Signalgewinnung verwendet, aber grundsätzlich sind auch induktive, optische und kapazitive Einrichtungen verwendbar. Bei all diesen Anordnungen kann nämlich ohne Trennbereich gearbeitet werden, was bei einem Potentiometer, d. h. einer Anordnung mit mechanischer Abtastung nicht der Fall ist, da dort im Regelfalle ein Trennbereich von wenigstens 10° benötigt wird.

Es sei noch erwähnt, daß unmittelbar an die Signalgewinnung das erhaltene analoge Signal digital umgeformt wird, wozu die erforderlichen Organe auf der gleichen Platine angeordnet sein können, wie die Sensoren. In jedem Falle ist aber sichergestellt, daß kurze Signalübertragungswege gewährleistet sind.

## Patentansprüche

1. Steuersystem für motorische Antriebe von zwischen zumindest zwei vorgebbaren Positionen verfahrbaren Vorrichtungen wie Toren, Transportgeräten, Fördersystemen, Versehrtenliften und dergleichen,
mit einer in Abhängigkeit von Ausgangssignalen eines Positionskomparators betätigbaren Schalt- und Steuereinrichtung für den Antriebsmotor, einem mit dem Antriebsmotor verbundenen Impulsgeber, dessen Ausgangssignale dem Positionskomparator und in vorgebbarer Weise einer mit dem Positionskomparator zusammenwirkenden Speichereinheit zuführbar sind,
sowie einer vom Benutzer betätigbaren externen Steuereinheit zur Erzeugung von Absolutpositionen zugeordneten, dem Positionskomparator zuführbaren Steuersignalen,
dadurch **gekennzeichnet,**
daß der als Multifunktionseinheit ausgeführte Positionskomparator (2) mit zugeordneter Zähleinheit unter Ausbildung einer minimierten Signalübertragungsstrecke dem Impulsgeber unmittelbar benachbart angeordnet ist, und daß die zwischen dem Positionskomparator (2) und der davon getrennten externen Steuereinheit (4) vorgesehene Verbindungsleitung (6) als Datenleitung zur Übertragung von Digitalsignalen in Form von Informationstelegrammen und die Sicherstellung der Korrektheit der Übetragung gewährleistenden zugehörigen Prüftelegrammen verwendet ist.

2. Steuersystem nach Anspruch 1,
dadurch **gekennzeichnet,**
daß die Informationstelegramme und die zugehörigen Prüftelegramme identisch sind, wobei insbesondere das jeweils einem Informationstelegramm zugeordnete Prüftelegramm einer durch Datenkompression modifizierten Version des Informationstelegramms entspricht.

3. Steuersystem nach einem der vorhergehenden Ansprüche,
dadurch **gekennzeichnet,**
daß zumindest dem Positionskomparator (2) eine Telegramm-Überprüfeinheit zugeordnet ist, die bei unzulässigen Abweichungen zwischen Informationstelegramm und Prüftelegramm ein Signal zur Auslösung von wenigstens einer Übertragungswiederholung erzeugt und vorzugsweise sowohl dem Positionskomparator (2) als auch der Steuereinheit (4) eine Telegramm-Überprüfeinheit zugeordnet ist, durch die die in beiden Richtungen übertragenen, jeweils Hochspracheninformation darstellenden Telegramme geprüft werden und der jeweiligen Sendestelle das Prüfergebnis über die Verbindungsleitung (6) übermittelt wird.

4. Steuersystem nach einem der vorhergehenden Ansprüche,
dadurch **gekennzeichnet,**
daß die Steuereinheit (4) über eine Ringleitung mit mehreren, selbständigen Antriebseinheiten zugeordneten und adressierbaren Positionskomparatoren (2) verbunden ist.

5. Steuersystem nach einem der vorhergehenden Ansprüche,
dadurch **gekennzeichnet,**
daß der als Inkrementalgeber ausgebildete Impulsgeber eine mit der Motorwelle rotierende Gebereinheit und eine stationäre Abtasteinheit aufweist, wobei die Abtasteinheit und der Positionskomparator zu einer kompakten Baueinheit zusammengefaßt und vorzugsweise auf zwei unmittelbar miteinander gekoppelten Platinen oder auf derselben Platine angeordnet sind.

6. Steuersystem nach einem der vorhergehenden Ansprüche,
dadurch **gekennzeichnet,**
daß der Positionskomparator (2) eine mit den Signalen des Inkrementalgebers gespeiste Zähleinheit aufweist, die über eine Datenleitung (6) mit der externen Steuereinheit (4) in Verbindung steht, in der die Speichereinheit vorgesehen ist.

7. Steuersystem nach einem der vorhergehenden Ansprüche,
dadurch **gekennzeichnet,**
daß der Inkrementalgeber den Positionskomparator (2) mit zwei insbesondere um 90° phasenverschobenen Impulssignalzügen speist, die im Positionskomparator zur permanent aktuellen Positionsbestimmung unter Berücksichtigung der jeweiligen Drehrichtung diskriminierbar sind.

8. Steuersystem nach einem der vorhergehenden Ansprüche,
dadurch **gekennzeichnet,**
daß der Positionskomparator (2) aus einer digitalen, insbesondere als ASIC ausgebildeten Schaltungsanordnung besteht,
die zwei Eingänge für die vom Inkrementalgeber gelieferten phasenverschobenen Impulszüge,
einen Eingang für ein Signal zur Zählerstandskalibrierung,
drei digitale Ausgänge für Summenimpuls, Drehrichtung und Sensorausfallerkennung, und
zumindest vier digitale Ausgänge zur Ansteuerung eines dem Antriebsmotor zugeordneten Frequenzumformers, sowie vorzugsweise eine zu weiteren Kommunikationszwecken dienende Schnittstelle in Form einer seriellen oder parallelen Schnittstelle aufweist.

9. Steuersystem nach einem der vorhergehenden Ansprüche,
dadurch **gekennzeichnet,**
daß der Positionskomparator (2) über eine insbesondere serielle Schnittstelle mit der externen Steuereinheit (4) über eine Datenleitung (6) zur Übergabe von Befehlen entsprechenden Informationstelegrammen und diesen zugeordneten Prüftelegrammen verbunden ist, welche die jeweils vom Antrieb anzufahrenden Absolutpositionen und / oder bestimmte Betriebsarten definieren, wobei Stellbefehle insbesondere aus Mehrfachtelegrammen bestehen.

10. Steuersystem nach einem der vorhergehenden Ansprüche,
dadurch **gekennzeichnet,**
daß vor dem Anfahren einer Absolutposition eine Differenzbildung zwischen dem aktuellen Zählerstand und dem der jeweiligen Absolutposition entsprechenden Zählerstand erfolgt und das Vorzeichen der Differenz die Motordrehrichtung bestimmt.

11. Steuersystem nach einem der vorhergehenden Ansprüche,
dadurch **gekennzeichnet,**
daß bei nicht umlaufend verfahrbarer Vorrichtung in zumindest einem Endbewegungsbereich und vorzugsweise im oberen Endbewegungsbereich der Vorrichtung ein Bereichsindikator zur Erzeugung eines dem Positionskomparator bzw. dessen Zähleinheit zuführbaren Kalibriersignals vorgesehen ist, wobei der Bereichsindikator aus einem ein Flankensignal zur Bewegungsabbremsung liefernden Organ besteht und durch die Positionierung dieses Organs der Flankenvorlauf einstellbar ist.

12. Steuersystem nach einem der vorhergehenden Ansprüche,
dadurch **gekennzeichnet,**
daß Mittel vorgesehen sind, die eine Übernahme eines im Bereich einer der Endstellungen erzeugten Synchronisiersignals außerhalb eines vorzugsweise einstellbaren, auf die Synchronisierposition bezogenen Zeitfensters blockieren.

13. Steuersystem nach einem der vorhergehenden Ansprüche,
dadurch **gekennzeichnet**,
daß jedem Positionskomparator (3) ein Stromausfallindikator zugeordnet ist.

14. Steuersystem nach einem der vorhergehenden Ansprüche,
dadurch **gekennzeichnet,**
daß bei umlaufend verfahrbarer Vorrichtung in einem vorgebbaren Bewegungsbereich der Vorrichtung ein Bereichsindikator vorgebbarer Länge zur Erzeugung von dem Positionskomparator bzw. dessen Zähleinheit zuführbaren Kalibriersignalen vorgesehen ist, wobei die Kalibriersignalerzeugung in Abhängigkeit von der Motordrehrichtung und dem Signalflankenverlauf erfolgt.

15. Steuersystem nach einem oder mehreren der vorhergehenden Ansprüche,
dadurch **gekennzeichnet,**
daß der Bereichsindikator als im Getriebegehäuse angeordneter Referenzpunktgeber ausgebildet ist und aus einem ring- oder kreisscheibenförmigen, einen Nord- und einen Südpolbereich aufweisenden, insbesondere scharf magnetisiertem Permanentmagneten und wenigstem einem auf das rotierende Magnetfeld dieses Permanentmagneten ansprechenden, berührungslos arbeitenden Sensor, insbesondere einem Hallsensor besteht, und daß der Referenzpunktgeber mit dem Abtrieb des als Schneckengetriebe ausgebildeten Getriebes über ein damit gekuppeltes weiteres Getriebe, insbesondere ein weiteres Schneckengetriebe verbunden und entsprechend der Bewegung der jeweils angetriebenen Einheit in einem Drehbereich zwischen 0° und 360° bewegbar ist.

16. Steuersystem nach einem oder mehreren der vorhergehenden Ansprüche,
dadurch **gekennzeichnet,**
daß ein mit dem Getriebe mechanisch, insbesondere über ein Schneckengetreibe gekuppelter, die Bewegung einer zumindest zwischen zwei Positionen verfahrbaren Vorrichtung in einem Drehbereich zwischen 0° und 360° abbildender, berührungslos arbeitender Absolutwertgeber vorgesehen ist,
daß der Absolutwertgeber die ungefähre Momentanposition der Vorrichtung kennzeichnende, einer Mehrzahl von Referenzpunkten entsprechende Aussgangssignale liefert und daß beim Einlauf der Vorrichtung in den Bereich der jeweiligen, durch einen bestimmten Zählerstand definierten Endposition über den Inkrementalgeber eine Korrektur der vom ungenauen Absolutwertgeber gelieferten Signale bzw. Zählwerte erfolgt.

17. Steuersystem nach einem oder mehreren der vorhergehenden Ansprüche,
dadurch **gekennzeichnet,**
daß ein mit dem Getriebe mechanisch, insbesondere über ein Schneckengetriebe gekuppelter, die Bewegung einer zumindest zwischen zwei Positionen verfahrbaren Vorrichtung in einem Drehbereich zwischen 0° und 360° abbildender, berührungslos arbeitender Absolutwertgeber vorgesehen ist, der vorzugsweise aus einem weich magnetisiertem, zweipoligem Permanentmagneten und zwei gegeneinander um 90° versetzt angeordneten Hallsensoren besteht, und daß durch Auswertung der jeweils lineraren Bereiche der Ausgangssignale der beiden Sensoren und auf trigonometrischen Funktionen beruhende Signalbildung hochgenaue, keine Korrektur durch einen Inkrementalgeber erfordernde Absolutwerte für die Momentanposition der verfahrbaren Vorrichtung erzeugt werden.
